(19) Europäisches Patentamt
European Patent Office
Office européen des brevets

(11) **EP 4 136 987 A1**

(12) **EUROPEAN PATENT APPLICATION**

(43) Date of publication:
**22.02.2023 Bulletin 2023/08**

(21) Application number: **21192019.4**

(22) Date of filing: **18.08.2021**

(51) International Patent Classification (IPC):
**A23P 20/20** (2016.01)    **A23P 30/20** (2016.01)
**B33Y 10/00** (2015.01)    **B33Y 30/00** (2015.01)

(52) Cooperative Patent Classification (CPC):
**A23P 20/20; A23P 30/20; B33Y 10/00;**
**B33Y 30/00;** A23P 2020/253; B33Y 70/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Revo Foods GmbH**
**1080 Wien (AT)**

(72) Inventors:
• **Ahmadi, Sirvan**
  **1080 Wien (AT)**
• **Lachmayr, Manuel**
  **1080 Wien (AT)**
• **Rothenbücher, Theresa**
  **1080 Wien (AT)**
• **Simsa, Robin**
  **1080 Wien (AT)**

(74) Representative: **Schwarz & Partner Patentanwälte GmbH**
**Patentanwälte**
**Wipplingerstraße 30**
**1010 Wien (AT)**

(54) **3D PRINT HEAD WITH SCREW EXTRUDER**

(57)    The present invention relates to a 3D print head, in particular a 3D food print head, comprising a cooling die (10) with at least one extrusion nozzle (10'), and a screw extrusion unit (1) comprising
- a drive unit (7),
- at least one material inlet (3) for introducing raw material, preferably raw food material, to be extruded,
- an extruder barrel (9) housing at least one screw (2, 4),
- and a discharge opening (5),
wherein the cooling die (10) is connected with the discharge opening (5), wherein the drive unit (7) is configured to rotate the at least one screw (2, 4). Further, the present invention also relates to a 3D printing system and a method for food printing with at least one 3D print head according to the invention.

Fig. 1

**Description**

TECHNICAL FIELD

The present invention relates to the field of 3D printing, in particular of 3D print heads and screw extruders.

BACKGROUND ART

As population growth, food shortages, and overfishing increasingly overburden natural ecosystems, it is of high importance to develop a sustainable and environmentally friendly food supply in the future. One possible alternative are plant-based meat/seafood, which recreate the sensory and nutritional properties of animal meats. A possible new production method to produce complex, heterogeneous meat/seafood alternatives is by using additive manufacturing in the food sector. There is also great potential here for numerous future fields of application (e.g. space travel, personalized nutrition).

Meat alternatives have existed for centuries in the form of tofu, tempeh or seitan. However, these alternatives have different sensory properties than animal meat, which consists of a high proportion of muscle fibers and animal fat. Studies show that consumers want to eat more sustainably, but the taste of meat and its specific characteristics are perceived as very positive, which makes it difficult to reduce/substitute (see e.g. Fiorentini M et al. (Foods. 2020;9(9):1334) and He J et al. (Comprehensive Reviews in Food Science and Food Safety. 2020;19(5):2639-2656). Plant-based meat alternatives are becoming increasingly popular, which is reflected in the increasing sales of meat substitutes in recent years. Since 2010, average growth of more than 8% per year is forecast in Europe, and more than 20% from 2021 onwards. However, currently, there are only few sustainable alternatives to seafood produced by industrial fishing and/or aquaculture, and almost no products that sustainably reproduce one of the most consumed fish in the world (salmon).

Furthermore, the amount of heavy metals, pesticides, microplastics, PCBs, antibiotics and other harmful substances in fish meat is constantly increasing. This leads to a health risk for consumers, especially when eating raw fish products (sushi, smoked salmon). The occurrence of parasites, bacteria and viruses in fish, which is particularly important in uncooked food (e.g. sushi), is responsible for thousands of hospitalizations worldwide every year.

Therefore, in order to appeal to consumers with sustainable plant protein-based meat products, it is important to reproduce the sensory characteristics of meat as accurately as possible. Known products rely either on non-textured products (e.g. fish sticks) or untextured (e.g. various loaves) products, which are mostly produced using conventional extrusion processes. However, the use of conventional extrusion processes for shaping and restructuring food ingredients to a final product is too coarse and imprecise for complex and structurally heterogeneous or high-value products such as salmon fillets or tuna steaks. Fully textured plant-based meat products such as salmon fillets and 3D printing technology for their production are not yet available.

DESCRIPTION OF THE INVENTION

It is an object of the present invention to provide 3D printing hardware components that allow 3D printing of textured products, in particular textured plant-based food products, out of untexturized raw material, and also allow for a precise control of the structure and shape of the final product.

Thus, the present invention relates to a 3D print head, in particular a 3D food print head, comprising a cooling die with at least one extrusion nozzle, and a screw extrusion unit comprising a drive unit, at least one material inlet for introducing raw material, preferably raw food material, to be extruded, an extruder barrel housing at least one screw, and a discharge opening, wherein the cooling die is connected with the discharge opening, wherein the drive unit is configured to rotate the at least one screw.

The installation of a screw extrusion unit in a 3D print head allows printing and texturizing of raw material, especially raw food material like e.g. plant-based proteins. The screw extrusion unit enables the transportation, mixing and texturizing of the raw material at the same time. The discharge opening is, preferably fluidly, connected with the cooling die to transport the processed material to the at least one extrusion nozzle for printing. For example, the inventive 3D print head allows texturizing plant-based proteins, preferably vegetable or legumes proteins, in order to produce plant-based seafood. Thus, in the inventive 3D print head the advantages of high moisture extrusion cooking and 3D printing technologies are combined. The screw extrusion unit has to be miniaturized to form a part of the 3D print head. In the screw extrusion unit, the raw material may be cooked, formed, mixed, texturized, and shaped under conditions that favour quality retention, high productivity and low cost. Preferably, the raw material is heated before being introduced into the extruder barrel, such that the raw material becomes a viscous melt. If the raw material contains plant proteins, these proteins are denatured during heating and lose their tertiary structure, forming an amorphous melt that gains an anisotropic fibrous structure during extrusion and after passing through a cooling die, which allows cross-linking of the plant-protein structures.

The 3D print head may comprise more than one extrusion nozzle, preferably up to four extrusion nozzles or more than four extrusion nozzles, in order to allow printing, the extruded material at different positions simultaneously on a build plate.

The screw extrusion unit may comprise either one or two screws. The at least one screw is configured to convey the raw material from the at least one material inlet to the discharge opening. Preferably, the screw extrusion unit comprises a first and second screw, which are intermeshed and counter- or co-rotating. In this embodiment of the 3D print head the screw extrusion unit is a twin screw extrusion unit.

The first and second screw transport, mix and homogenize the raw materials by applying shear forces generated in the extruder barrel, which are caused by the interaction between the screws and the extruder barrel and the screws. In the embodiment with a single screw, the shear forces are generated by the interaction between the screw and the extruder barrel only. This procedure gives the extrudate the desired shape and texture. The applied shear rates can range from low to high and may be adopted depending on the desired product and the used raw material. High shear rates may be applied by the screw extrusion unit on the raw material in the inventive 3D print head, preferably by rotating the at least one screw at a speed of more than 15 rpm, preferably of more than 30 rpm, more preferably of more than 50 rpm, more preferably of more than 100 rpm, even up to more than 150 rpm, can be applied.

Furthermore, in case the first and second screw are intermeshed, the pumping action and, thus, the transportation of the raw material in the extruder barrel is enhanced compared to single screw or non-intermeshed twin screw extruders. Moreover, the mixing is much more efficient and the screws show a self-cleaning mechanism. Intermeshed screws may also handle viscous, oily, sticky or wet raw materials and it is possible to add up to 25% of fat to the raw material.

On the one hand, counter-rotating twin screws are excellent conveyors and are good in processing relatively non-viscous material. Moreover, lower rotation speeds of the first and second screw may be chosen in this case and long residence times of the raw material in the extruder barrel may be achieved. On the other hand, co-rotating twin screws allow for a high degree of heat transfer and a high pumping efficiency. Further, the residence time distribution of the raw material in the extruder barrel can be controlled very well, they show a self-cleaning mechanism and the processing is in general very uniform. Summarizing, depending on the raw material co- or counter-rotating screws may be chosen.

In another embodiment, the shape of the first and second screw is changing from the first material inlet to the discharge opening, thus forming at least a first and a second zone, such that pressure and temperature conditions within the extruder barrel may increase from the first to the second zone. With the help of this first and second zone a desired shearing action for the introduced raw material may be achieved.

Further, the at least one screw may comprise at least two, preferably at least three, more preferably at least four, more preferably at least five, different screw elements, wherein at least one screw element is a kneading element in the form of prismatic discs and at least one screw element is a conveying element, wherein the screw elements may be double flight screws and/or self-wiping. In the case of a twin screw extrusion unit both, the first and second screw, comprise at least two different screw elements which complement each other to allow for an intermeshing twin screw extruder. The screw elements permit converting raw material into a product of uniform shape and density by forced passage of the material through the extruder barrel, which enfolds them under controlled conditions. The material transport in the extruder barrel occurs due to the rotation mechanism of the screw extrusion unit, the volume between the flights of the at least one screw and in the case of a twin screw extrusion unit also due to the seal created between the screws. More precisely, the throughput of the extruder is proportional to the rotation speed of the at least one screw.

Double flight screws can build more pressure and positive displacement and self-wiping screws allow for an efficient transport of the raw material through the extruder barrel. Preferably, the centreline distance A and the external diameter $d_E$ of at least one screw element fulfils the formula

$$\frac{A}{d_E} \geq \cos \frac{90°}{2}.$$

The at least one kneading element is a self-cleaning profile and the prismatic discs are offset with respect to one another. At least one kneading element may be a neutral kneading element with a stagger angle of essentially 90° between the prismatic discs and at least one kneading element may have varying stagger angles. For the neutral kneading element the conveying effect on the raw material is essentially negligible, whereas the shearing effect is very strong. In contrast to that, the conveying element has a strong conveying effect.

In a further embodiment of the 3D print head with at least two different screw elements the core diameter of the at least one conveying element is at least 5 mm, preferably between 6 and 10 mm, wherein the pitch length of at least one conveying element is between 10 mm and 1 cm, preferably between 20 mm and 900 mm, more preferably between 50 mm and 800 mm.

Moreover, the diameter of the extruder barrel may be between 10 and 100 mm, preferably between 15 and 50 mm, more preferably 20 and 40 mm, more preferably between 25 and 30 mm, wherein the clearance between the wall of the extruder barrel and the at least one screw may be between 0.2 and 5 mm, preferably between 1.5 and 2.5 mm, wherein the external diameter of the at least one screw may be between 20 and 40 mm, preferably between 21 and 25 mm. In the case of a twin screw extrusion unit, the clearance between the first and second screw may be at least 0.1 mm, preferably 0.5 mm. These variables allow on the one hand for the miniaturization of the screw extrusion unit and on the other hand for the desired shearing and kneading effect on the raw material.

In another embodiment of the inventive 3D print head heating elements and/or cooling elements enfold the at least one screw along a central axis of the screw shaft. In this way, heating and cooling of the raw material in the extruder barrel can be achieved in a very controlled way and thus, allows to texturize the raw material as desired. By enfolding the extruder barrel with heating elements, a modification of the temperature along the length of the extruder barrel is permitted. Preferably, the heating elements are configured to heat the raw material up to 180°C, preferably up to 140°C.

For producing plant-based texturized food, for instance, the raw material comprising plant-based proteins has to be cooked in the extruder barrel, in order to allow for a denaturation. This short time heating process minimizes the degradation of food nutrients while improving the digestibility of the proteins by denaturing. Moreover, also antinutritional compounds and undesirable enzymes may be destroyed by heating up the raw material.

In a further embodiment the extruder barrel comprises at least two heating elements, wherein at least one insulator is arranged between the at least two heating elements. The at least two heating elements and the insulator enable the generation of different temperature zones inside the extruder barrel.

Preferably, the extruder barrel comprises at least three temperature zones including at least one first zone with a temperature below 60°C, preferably between 15°C and 60°C, at least one second zone with a temperature below 100°C, preferably between 40°C and 100°C, and at least one third zone with a temperature below 180°C, preferably between 80°C and 180°C, more preferably between 80°C and 140°C, wherein insulators are preferably arranged between the temperature zones. The at least one first zone may be also called the feeding zone, where the raw material enters the extruder barrel via the at least one material inlet. From there, the raw material is conveyed to the at least one second zone, which is the kneading zone. In this zone, the at least one screw comprises preferably at least one kneading element, which allows to compress the raw material. Thus, the density of the raw material increases in this zone leading to more pressure in the extruder barrel. Further, a strong shearing mechanism may take place in the second zone with the help of the kneading elements, which helps to texturize the raw material. In the at least one third zone, which may be called the cooking zone, the high temperature allows to cook the raw material to a preferred level. More precisely, by changing the temperature and/or shearing power in the cooking zone via the screw elements and/or heating elements the raw material can be processed such that it obtains the desired texture, density, color and functional properties. After leaving the third zone the cooked raw material passes through the cooling die, where the texturization of the material takes place.

In a preferred embodiment, an isolation part is arranged around the screw extrusion unit, wherein temperature sensors are arranged behind the isolation part inside the extruder barrel. Preferably, the temperature sensors are arranged as near as possible to the inside of the extruder barrel. With the help of this isolation part and the temperature sensors the temperature in the different zones in the extruder barrel can be maintained very accurately.

Furthermore, the cooling die may be configured to cool the food material down to a temperature of less than 80°C, preferably less than 60°C, more preferably less than 50°C, more preferably less than 40°C, or to a temperature between 5°C and 80°C, preferably between 10°C to 70°C, more preferably between 20°C to 50°C. This is especially important if the raw material is a raw food material comprising water, such that the water does not evaporate after printing. Preferably, the flow of the extruded material in the cooling die is of laminar type with a Reynolds number from preferably 2 to 73, such that a precise texturation is possible. The Reynolds number can be increased under some specific conditions or through using some additional materials, preferably in a 4D printing process, and even by changing the size of cooling die under specific conditions. The laminar flow also enables the development of a velocity gradient, which helps to align protein molecules in a fibrous structure. The extruder barrel may have a larger diameter than the cooling die, such that there is a contraction just before the cooling die.

In another embodiment the screw extrusion unit comprises a first material inlet and at least one additional material inlet, wherein the at least one additional material inlet is arranged along the central axis in fluid direction preferably downwards the first material inlet. Having more than one material inlet allows to insert different raw materials into the extruder barrel and/or to insert raw material at different zones of the extruder barrel. For example, it is possible to insert material, which should not be heated and/or sheared too much, downstream the first material inlet. Further, proteins that should not be denatured can be added after the cooking zone. It is also possible to add fluids like water, oil or emulsions at any point to the extruder barrel.

The 3D print head may also comprise a controlling unit, wherein the controlling unit is configured to control the drive unit and/or the heating elements and/or the cooling elements and/or the amount of raw material introduced in the twin screw extrusion unit and/or to be connected and cooperate with external control units. With the help of this controlling unit, an automated process is possible.

The present invention also relates to a 3D printing system comprising at least one 3D print head according to the invention, at least one feeding system and a control unit, wherein the at least one feeding system comprises a filling tank, wherein the at least one feeding system is connected to the at least one material inlet, wherein the control unit is configured to control the at least one 3D print head and/or the amount of raw material entering the twin screw extrusion unit and/or the mixing and homogenising of the raw material. The control unit may be configured to control the heating elements and/or cooling elements and/or the drive unit.

The filling tank preferably comprises a heating system, which is preferably configured to heat the raw material in the filling tank up to 180°C, a mixing system and a material outflow. Thus, the raw material can be heated, mixed and homogenized already in the filling tank.

Further, the 3D printing system may comprise a build plate, wherein the build plate is movable. A movable build plate allows for a static 3D print head. Preferably, the movement of the build plate is also controlled via the control unit.

In another aspect of the invention it relates to a method for food printing with at least one 3D print head according to the invention or a 3D printing system according to the invention, comprising the steps:

> introducing raw food material to the first material inlet and into the extruder barrel and conveying and kneading the raw material via the screw elements, preferably heating the food material up to 180°C,
> shearing the processed food material to a texturized food material,
> guiding the texturized food material to the cooling die, where it is formed and preferably cooled down to below 90°C, and
> pushing the cooled down texturized food material through the extrusion nozzle.

Preferably, the at least one 3D food print head comprises heating elements, wherein the raw food material comprises plant proteins, wherein the heating elements denature and texturize the plant proteins in the screw extrusion unit and the cooling die. Further, the temperature, pressure and shearing power may be increasing from the first material inlet to the discharge opening of the screw extrusion unit. The design of the extruder barrel and the at least one screw has a great impact on the product characteristics. Residence time, cooking temperature, and shear forces applied into the raw material need to be considered for an accurate design to obtain the desired product.

Moreover, the raw material introduced into the extruder barrel may have already been mixed based on a specific recipe and/or may be heated up. Preferably, the at least one material inlet may provide a sufficient volume of raw material into the extruder barrel, such that the screw extrusion unit can operate consistently.

The invention also relates to the use of a 3D print head according to the invention or a 3D printing system according to the invention for the production of food products.

BRIEF DESCRIPTION OF THE FIGURES

Further details and advantages of the present invention result from the description and the accompanying figures, which are incorporated herein. Together with the corresponding figure description, the illustrated drawings further serve to explain the principles of and to enable a person skilled in the art to use the present invention.

Fig. 1 shows a schematic sectional top view of an embodiment of a 3D print head with a twin screw extrusion unit.
Fig. 2 shows a side view of the inventive 3D print head.
Fig. 3 shows a perspective view of the inventive print head with the screw extrusion unit.
Fig. 4a - 4c shows a perspective view (Fig. 4a), a side view (Fig. 4b) and a top view (Fig. 4c) of an exemplary embodiment of the two screws of the twin screw extrusion unit.

DESCRIPTION OF EMBODIMENTS

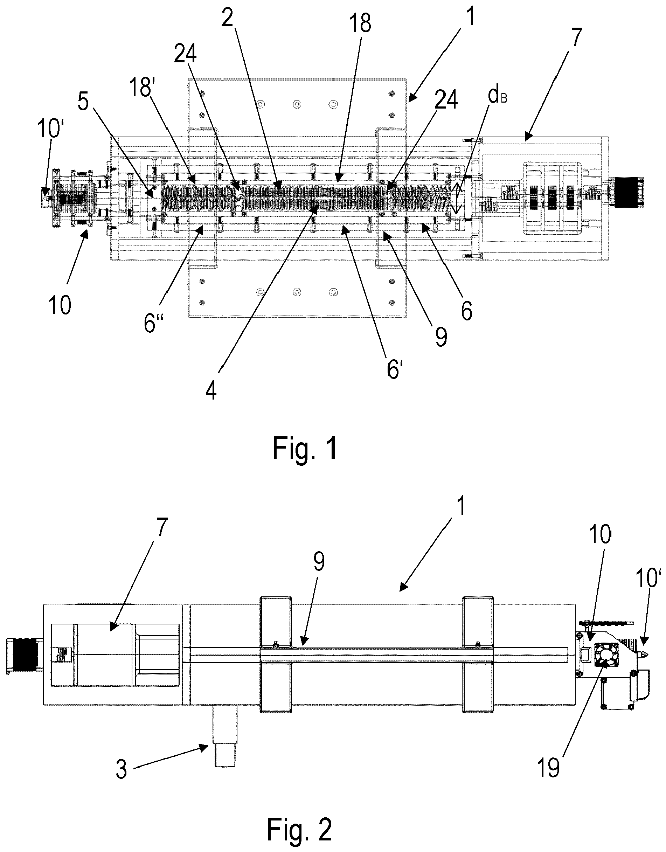

Fig. 1 shows a 3D print head according to an example embodiment of this invention. Preferably, the 3D print head is a 3D food print head, especially for printing plant-protein based food. The 3D print head comprises a cooling die 10 with at least one extrusion nozzle 10', and a screw extrusion unit 1 comprising

- a drive unit 7,
- at least one material inlet 3 for introducing raw material, preferably raw food material, to be extruded,
- an extruder barrel 9 housing at least one screw 2, 4,
- and a discharge opening 5.

The discharge opening 5 is connected with the cooling die 10, such that the extruded material may enter the cooling die 10 and in the next step be printed via the at least one extrusion nozzle 10'. Preferably, the diameter of the cooling die 10 is smaller than the diameter of the extruder barrel 9. Further, the cooling die 10 may be tapered in the direction of the extrusion nozzle 10', for example, it may be conically tapered. The drive unit 7 of the screw extrusion unit 1 is configured to rotate the at least one screw 2, 4 at a preferred speed. The drive unit 7 may comprise a gear box with coupling parts and gears and a motor, preferably a stepper motor.

In the embodiment shown in Fig. 1 the screw extrusion unit is a twin screw extrusion unit comprising a first screw 2 and a second screw 4. The first and second screw 2, 4 are intermeshed and counter- or co-rotating.

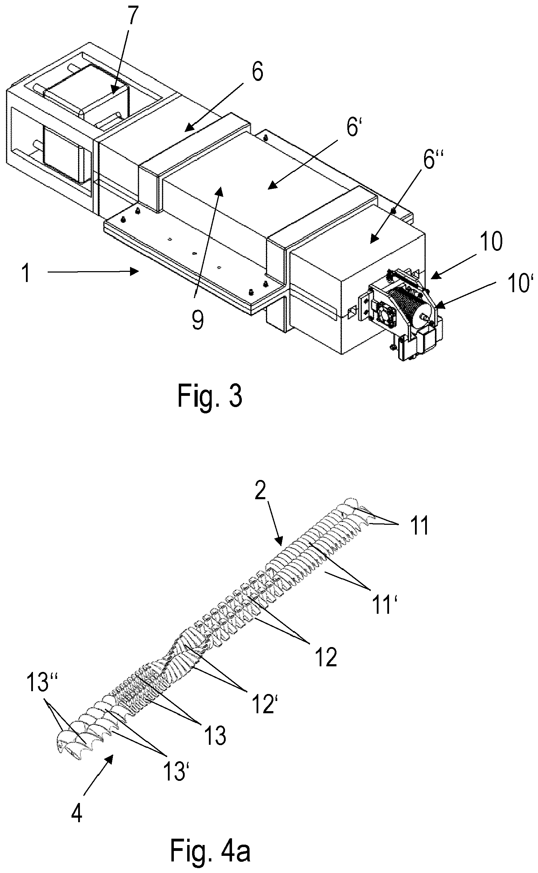

Moreover, the extruder barrel 9 may comprise three different zones 6, 6', 6" as depicted in Fig. 1 and Fig. 3. The actions and sequence of occurrences in the screw extrusion unit require the extrusion barrel to be subdivided into processing zones. These zones are three temperature zones including a first zone 6 with a temperature below 60°C, preferably between 15°C and 60°C, a second zone 6' with a temperature below 100°C, preferably between 40°C and 100°C and a third zone 6" with a temperature below 180°C, preferably between 80°C and 180°C, more preferably between 80°C and 140°. The first to third zone 6, 6', 6" are arranged downstream in the extruder barrel 9. These zones may also correspond to a feeding zone 6, a kneading zone 6' and a cooking zone 6". Preferred temperature and pressure conditions are achieved in these zones via the at least one screw 2, 4 and heating elements 18, 18' and/or cooling elements 19. Preferably, the heating elements 18, 18' and/or cooling elements 19 enfold the at least one screw 2, 4 along a central axis of the screw shaft. Furthermore, insulators 24 are preferably arranged between the temperature zones 6, 6', 6".

Preferably, in the feeding zone 6 the low-density preconditioned particles of the raw material are pumped into the interior of the extruder barrel 9 through the at least one material inlet 3. The raw material may have a low density due to entrapped air and granular nature of the material. As the raw material is being conveyed through the extruder barrel, it is compressed, and the entrapped air is expelled.

In the kneading zone 6' the compression of the raw material is started so that the density of the raw material increases leading in more pressure in the extruder barrel. The shearing mechanism take place in this zone 6' as well, which play a significant role in texturing the raw material. Shearing is that kind of importance because in the kneading zone 6' discrete particles of the raw material begin to agglomerate due to the increasing temperature and friction. The configuration of the extruder barrel has been designed such that countercurrent flow of vapors is prevented towards the at least one material inlet 3. By this the generated steam in the extruder barrel 9 can be used for texturing the raw material flowing in the extruder barrel 9.

Further, in the cooking zone 6" texturing of the raw material occurs. In this part temperature and pressure are at their highest rate, while because of the screw configuration the highest rate of shearing powers is employed as well leading in fluid viscosity draining to the cooling die 10 to be printed in desired texture, density, color and functional properties.

In another embodiment the extruder barrel 9 may comprise at least two heating elements 18, 18', wherein at least one insulator 24 is arranged between the at least two heating elements 18, 18'.

Further, the heating elements 18, 18' may comprise different kind of heaters such as Kapton heaters, silicone heaters etc. The cooling elements 19 and/or the cooling die 10 may comprise at least one ventilator 20, preferably a blower fan and/or a radial fan and/or at least one thermoelectric cooler . The cooling elements 19 may be arranged in the vicinity of the cooling die 10.

As depicted in Fig. 2 the at least one material inlet 3 is preferably arranged at the front end of the extruder barrel 9, that is opposite the discharge opening 5. Thus, the raw material entering the screw extrusion unit 1 through the at least one material inlet 3 passes through the entire extruder barrel 9. However, the at least one material inlet 3 may comprise a first material inlet 3 at the front end of the extruder barrel 9 and an additional material inlet, which is preferably arranged in fluid direction downwards the first material inlet 3.

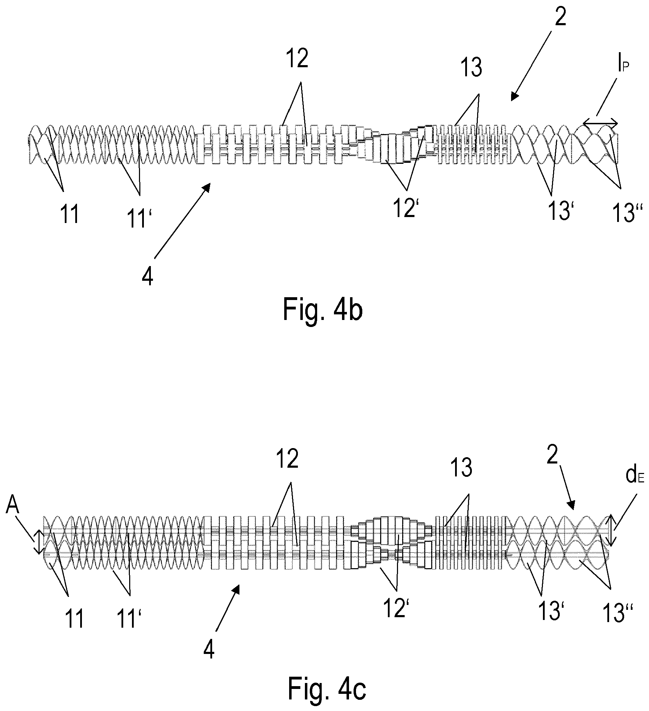

In Fig. 4a - 4c an exemplary embodiment of two screws of a screw extrusion unit 1 is shown. These figures show a first and second screw 2, 4, however, the same applies if only a single screw 2, 4 is used in the screw extrusion unit 1. The at least one screw 2, 4 is arranged along the central axis of the extruder barrel 9 and configured to rotate around its shaft axis. The at least one screw 2, 4 comprise several different screw elements 11, 11', 12, 12', 13, 13', 13'', which convey the raw material from the material inlet 3 to the discharge opening 5. The screw elements 11, 11', 12, 12', 13, 13', 13" also define the different processing zones in the extruder barrel 9, namely the first or feeding zone 6, the second or kneading zone 6' and the third or cooking zone 6". Preferably, these screw elements 11, 11', 12, 12', 13, 13', 13" comprise at least one kneading element 12, 12' and at least one conveying element 11, 11', 12, 12', 13, 13', 13''. The screws 2, 4 depicted in Fig. 4a - 4c are intermeshed, double flight and self-wiping. The screws 2, 4 may be fully wiped and counter- or co-rotating. More precisely, in the embodiment shown in Fig. 4a - 4c the first and second screw 2, 4 each comprise three different conveying elements 13, 13', 13" at the front end defining the feeding zone 6, two different kneading elements 12, 12' in the middle part defining the kneading zone 6' and two different conveying elements 11, 11' at the back end of the screws 2, 4 defining the cooking zone 6" in the extruder barrel 9. Summarizing, each screw 2, 4 comprises seven different screw elements 11, 11', 12, 12', 13, 13', 13" in this exemplary embodiment.

The screw elements 11, 11', 12, 12', 13, 13', 13" allow to transport, mix, knead, shear and drain the raw material through the extruder barrel 9. The design of the screw elements 11, 11', 12, 12', 13, 13', 13" depends on the device application, that is, on the used raw material and the properties of the product that should be printed in the end. Thus, the design and the number of different screw elements 11, 11', 12, 12', 13, 13', 13" may vary depending on the application. Further, for a twin screw extrusion unit 1 the first and second screw 2, 4 may be counter- or co-rotating, again depending on the used raw material. For co-rotating screws 2, 4 adjacent screw elements 11, 11', 12, 12', 13, 13', 13" are identical in geometry, are symmetrical and rotate at the same speed. For counter-rotating intermeshed screw elements 11, 11', 12, 12', 13, 13', 13" the flight of one screw 2 approaches the opposing channel of the other screw 4 and they show a positive displacement. However, a high rate of positive displacement would lead to poor quality of homogenizing. Thus, two different kneading elements 12, 12' may be employed to put a controlled resistance against the raw material flow in order to provide enough residence time for processing the raw material and texturizing it subsequently.

The kneading elements 12, 12' are composed of prismatic discs in an offset with respect to each other, which are in charge of mixing the raw material. They deform the material in distributive and dispersive ways. The most important features of these kneading elements 12, 12' that may be considered in their design are length, stagger angle, number and width of discs and conveying direction. Setting different angle between the kneading elements considering the material processing level, allows conveying them by pushing a build-up pressure in the opposite direction. The kneading elements 12, 12' in Fig. 4a - 4c are neutral kneading elements with a stagger angle of essentially 90° between the prismatic discs and a varying stagger angle, respectively, they are self-wiping and push the raw material in downstream fluid direction. Preferably, the at least one kneading element 12, 12' comprises a first kneading element 12 with a stagger angle of essentially 90° and a second kneading element 12' with varying stagger angles between the prismatic discs. For the first kneading element 12 the mixing effect dominates over the conveying effect.

In another embodiment the flight tips of the screw elements 11, 11', 12, 12', 13, 13', 13" of the first and second screw 2, 4 have opposite velocity directions, that is, the screws 2, 4 are counter-rotating. Thus, the raw material is constantly pushed forward in spiral pattern as it moves in the downstream direction of the central axis of the extruder barrel 9 leading in a sealing line along the screw flanks, which permit a wiping movement of the screws 2, 4.

Further, the pitch length lp of the at least one conveying element 11, 11', 13, 13', 13" may be set based on the external diameter $d_E$. Preferably, the screw elements 11, 11', 12, 12', 13, 13', 13" comprise at least one first conveying element 13', 13", preferably two first conveying elements 13', 13", with a pitch length lp between 1,2 and 1,8 $d_E$, particularly preferred around 1,5 $d_E$. This at least one first conveying element 13', 13" may be a conveying element in the first or feeding zone 6 at the front end of the extruder barrel 9, which enables a high conveying rate and low percent fill. After the at least one first conveying element 13', 13" in downstream direction there may be a second conveying element 13, still in the first zone 6, with a small pitch length lp, preferably between 0,3 and 0,7 $d_E$. Conveying elements with small pitch lengths lp provide high percent fill without generating significant melt pressure, for that they are using typically for transporting and pumping. After the kneading elements 12, 12' in the second or kneading zone 6' of the extruder barrel 9 there may be at least one conveying element 11, 11' in the third or cooking zone 6" with a medium pitch length lp, preferably between 0,7 and 1,2 $d_E$. The medium pitch screw elements are used for melting compression.

In another embodiment the core diameter of the at least one conveying element 11, 11', 13, 13', 13" is at least 5mm, preferably between 6 and 10 mm and the pitch length lp is between 10mm and 1 cm. Further, the diameter of the extruder barrel $d_B$ may be between 20 and 40 mm, preferably between 25 and 30 mm, wherein the clearance between the wall of the extruder barrel 9 and the at least one screw 2, 4 may be between 0,2 and 5 mm, preferably between 1,5 and 2,5 mm, wherein the external diameter of the at least one screw $d_E$ may be between 20 and 40 mm, preferably between 21 and 25 mm. Moreover, for a twin screw extrusion unit 1 the centreline distance A between the first and second screw may be between 10 and 30 mm, preferably between 12 and 18 mm. The clearance between the first and second screw 2, 4 may be between 0,1 and 1 mm, preferably between 0,3 and 0,7 mm. These dimensions allow for a miniaturized screw extrusion unit 1, which can be easily integrated into the inventive 3D print head.

A further aspect of the invention relates to a 3D printing system comprising at least one 3D print head according to the invention, at least one feeding system and a control unit. The at least one feeding system comprises a filling tank and the at least one feeding system is connected to the at least one material inlet 3 of the extruder barrel 9. Preferably, the filling tank comprises a heating system, which is preferably configured to heat the raw material in the filling tank up to 180°C, a mixing system and a material outflow. Thus, before being introduced into the extruder barrel 9 the raw material can be mixed and homogenized in the filling tank. The control unit is configured to control the at least one 3D print head and/or the amount of raw material entering the screw extrusion unit 1 and/or the mixing and homogenising of the raw material. Thus, with the help of the control unit the desired shape and amount of the printed product can be adjusted.

In a certain embodiment, the 3D printing system comprises two or more 3D print heads. In this case, different raw materials may be introduced into the extruder barrels 9 of the 3D print heads, such that a product consisting of two or more components can be printed.

Moreover, the 3D printing system can comprise a movable build plate, which may be also controlled via the control unit. This build plate is arranged underneath the at least one extrusion nozzle 10', such that the printed material is applied to the print plate. In this case, when printing the material instead of the 3D print head the build plate is moving, allowing for more flexibility, as not the whole print head has to be moved. Another option would be a movable 3D print head. Then, the print head preferably comprises a distance sensor, which is arranged close to the cooling die 10. With the help of the distance sensor the control unit may control the movement of the print head.

Summarizing, the inventive 3D print head and/or the 3D printing system allow for a controllable process, in which raw material is texturized and formed to a specific shape. The raw material, especially raw food material, may comprise various food ingredients that are combined into one product to achieve specific product's characteristics, thus, the 3D print head according to the invention allows for a unitizing process. Furthermore, the screw extrusion unit 1 also provides a continuous high-throughput processing and may be controlled automatically via the control unit. More precisely, the at least one screw 2,4 of the screw extrusion unit 1 causes the desired amount of mixing process in the extruder barrel 9 and/or homogenizes the raw material by restructuring unattractive textures of the raw material into more acceptable forms. The at least one screw 2, 4 in combination with the extruder barrel 9 and the heating elements 18, 18' denatures plant proteins contained in the raw material by extrusion cooking and/or causes the desired shearing action for the raw material and/or alters the physical and chemical texture under a variety of temperature and pressure conditions in the extruder barrel 9. Moreover, via the cooling die 10, which is connected to the discharge opening 9, the 3D print head makes a desired texture shape of the product.

**Claims**

1. A 3D print head, in particular a 3D food print head, comprising a cooling die (10) with at least one extrusion nozzle (10'), and a screw extrusion unit (1) comprising

   - a drive unit (7),
   - at least one material inlet (3) for introducing raw material, preferably raw food material, to be extruded,
   - an extruder barrel (9) housing at least one screw (2, 4),
   - and a discharge opening (5),

   wherein the cooling die (10) is connected with the discharge opening (5),
   wherein the drive unit (7) is configured to rotate the at least one screw (2, 4).

2. The 3D print head according to claim 1, **characterized in that** the at least one screw (2, 4) comprises a first and second screw (2, 4), wherein the first and second screw (2, 4) are intermeshed and counter- or co-rotating.

3. The 3D print head according to any of the claims 1 to 2, **characterized in that** the shape of the at least one screw (2, 4) is changing from the first material inlet (3) to the discharge opening (5), thus forming at least a first and at least a second zone (6, 6') and configured to increase the pressure and temperature conditions from the first to the second zone (6, 6').

4. The 3D print head according to any of the claims 1 to 3, **characterized in that** the at least one screw (2, 4) comprises at least two different screw elements (11, 11', 12, 12', 13, 13', 13"), wherein at least one screw element is a kneading element (12, 12') in the form of prismatic discs and at least one screw element (11, 11', 13, 13', 13") is a conveying element, wherein the screw elements (11, 11', 12, 12', 13, 13', 13") are double flight screws and/or self-wiping.

5. The 3D print head according to claim 4, **characterized in that** the core diameter of the at least one conveying element (11, 11', 13, 13', 13") is at least 5 mm, preferably between 6 and 10 mm, wherein the pitch length (lp) of at least one conveying element (11, 11', 13, 13', 13") is between 10 mm and 1 cm.

6. The 3D print head according to any of the claims 1 to 5, **characterized in that** the diameter of the extruder barrel ($d_B$) is between 20 and 40 mm, preferably between 25 and 30 mm, wherein the clearance between the wall of the extruder barrel (9) and the at least one screw (2, 4) is between 0,2 and 5 mm, preferably between 1,5 and 2,5 mm, wherein the external diameter of the at least one screw ($d_E$) is between 20 and 40 mm, preferably between 21 and 25 mm.

7. The 3D print head according to any of the claims 1 to 6, **characterized in that** the heating elements (18) and/or cooling elements (19) enfold the at least one screw (2, 4) along a central axis of the screw shaft, wherein the heating elements (18) are configured to heat the raw material up to 180°C.

8. The 3D print head according to any of the claims 1 to 7, **characterized in that** the extruder barrel (9) comprises at least three temperature zones including a first zone (6) with a temperature below 60°C, a second zone (6') with a temperature below 100°C and a third zone (6") with a temperature below 180°C, wherein insulators (24) are preferably arranged between the temperature zones, wherein the cooling die (10) is configured to cool the processed material down to a temperature of less than 80°C.

9. The 3D print head according to any of the claims 1 to 8, **characterized in that** the extruder barrel (9) comprises at least two heating elements (18, 18'), wherein at least one insulator (24) is arranged between the at least two heating elements (18, 18').

10. The 3D print head according to any of the claims 1 to 9, **characterized in that** the at least one material inlet (3) comprises a first material inlet (3) and at least one additional material inlet, wherein the at least one additional material inlet is arranged along the central axis in fluid direction preferably downwards the first material inlet (3).

11. The 3D print head according to any of the claims 1 to 10, **characterized in that** the 3D print head comprises a controlling unit, wherein the controlling unit is configured to control the drive unit (7) and/or the heating elements (18) and/or the cooling elements and/or the amount of raw material introduced in the twin screw extrusion unit (1) and/or to be connected and cooperate with external control units.

12. A 3D printing system comprising at least one 3D print head according to any of the claims 1 to 11, at least one feeding system and a control unit, wherein the at least one feeding system comprises a filling tank, wherein the at least one feeding system is connected to the at least one material inlet (3), wherein the control unit is configured to control the at least one 3D print head and/or the amount of raw material entering the screw extrusion unit (1) and/or the mixing and homogenising of the raw material, wherein the filling tank comprises a heating system, which is preferably configured to heat the raw material in the filling tank up to 180°C, a mixing system and a material outflow.

13. The 3D printing system according to claim 12, **characterized in that** the 3D printing system comprises a build plate, wherein the build plate is movable.

14. A method for food printing with at least one 3D print head according to any of the claims 1 to 11 or a 3D printing system according to any of the claims 12 to 13, comprising the steps

> a. introducing raw food material to the at least one material inlet (3) and into the extruder barrel (9) and conveying and kneading the raw material via the at least one screw (2, 4),
> b. preferably heating the food material up to 180°C,
> c. shearing the raw food material to a texturized food material,
> d. guiding the texturized food material to the cooling die (10), where it is formed and preferably cooled down to below 90°C, and
> e. pushing the cooled down texturized food material through the at least one extrusion nozzle (10').

15. The method according to claim 14, **characterized in that** the at least one 3D food print head comprises heating elements (18), wherein the raw food material comprises plant proteins, wherein the heating elements (18) denature the plant proteins in the screw extrusion unit (1), wherein the temperature, pressure and shearing power is increasing from the at least one material inlet (3) to the discharge opening (5) of the screw extrusion unit (1).

Fig. 1

Fig. 2

Fig. 3

Fig. 4a

Fig. 4b

Fig. 4c

Europäisches
Patentamt

European
Patent Office

Office européen
des brevets

# EUROPEAN SEARCH REPORT

Application Number

EP 21 19 2019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 2020 0092483 A (LINCSOLUTION CO LTD [KR]) 4 August 2020 (2020-08-04) * paragraph [0022] – paragraph [0048]; figures 1-4 * | 1-15 | INV. A23P20/20 A23P30/20 B33Y10/00 B33Y30/00 |
| Y | EP 3 578 053 A1 (VERSO FOOD OY [FI]) 11 December 2019 (2019-12-11) * paragraph [0015] – paragraph [0024]; figure 1 * | 1-15 | |
| A | WO 2018/169389 A1 (BYFLOW B V [NL]) 20 September 2018 (2018-09-20) * page 5, line 3 – page 9, line 18; figures 1-4 * | 1-15 | |
| A | DE 20 2014 001005 U1 (PAREISS BERND [DE]) 17 March 2014 (2014-03-17) * paragraph [0014] – paragraph [0016]; figures 1-4 * | 1-15 | |
| A | US 2017/295816 A1 (WANG YUNGAN [CN] ET AL) 19 October 2017 (2017-10-19) * paragraph [0047] – paragraph [0051]; figure 1 * | 1-15 | TECHNICAL FIELDS SEARCHED (IPC) A23P B33Y |

The present search report has been drawn up for all claims

| Place of search | Date of completion of the search | Examiner |
|---|---|---|
| Munich | 5 January 2022 | Dartis, Daniel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 19 2019

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2022

| Patent document cited in search report | | Publication date | Patent family member(s) | | Publication date |
|---|---|---|---|---|---|
| KR 20200092483 | A | 04-08-2020 | NONE | | |
| EP 3578053 | A1 | 11-12-2019 | BR 112020024778 | A2 | 13-04-2021 |
| | | | CA 3101243 | A1 | 12-12-2019 |
| | | | CN 112203522 | A | 08-01-2021 |
| | | | DK 3578053 | T3 | 07-12-2020 |
| | | | EP 3578053 | A1 | 11-12-2019 |
| | | | ES 2828354 | T3 | 26-05-2021 |
| | | | HR P20201755 | T1 | 25-12-2020 |
| | | | HU E051703 | T2 | 29-03-2021 |
| | | | JP 2020018279 | A | 06-02-2020 |
| | | | KR 20210006997 | A | 19-01-2021 |
| | | | LT 3578053 | T | 25-11-2020 |
| | | | PL 3578053 | T3 | 08-02-2021 |
| | | | PT 3578053 | T | 06-10-2020 |
| | | | SI 3578053 | T1 | 29-01-2021 |
| | | | US 2019364925 | A1 | 05-12-2019 |
| | | | WO 2019233836 | A1 | 12-12-2019 |
| WO 2018169389 | A1 | 20-09-2018 | EP 3576551 | A1 | 11-12-2019 |
| | | | NL 2018501 | A | 17-09-2018 |
| | | | US 2020045990 | A1 | 13-02-2020 |
| | | | WO 2018169389 | A1 | 20-09-2018 |
| DE 202014001005 | U1 | 17-03-2014 | NONE | | |
| US 2017295816 | A1 | 19-10-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FIORENTINI M et al.** *Foods,* 2020, vol. 9 (9), 1334

- **HE J et al.** *Comprehensive Reviews in Food Science and Food Safety,* 2020, vol. 19 (5), 2639-2656